# EUROPEAN PATENT SPECIFICATION

(11) **EP 1 691 504 B1**
(45) Date of publication and mention of the grant of the patent: **22.03.2017**
(21) Application number: 04762068.7
(22) Date of filing: 11.08.2004
(51) Int. Cl.: H04L 12/00, H04L 12/66, H04L 29/06, H04W 4/06, H04W 28/00

(54) **A METHOD FOR CREATING AND PARSING SERVICE VOICE BROADCASTING REQUESTS IN A BEARER AND CONTROL SEPARATED NETWORK**
VERFAHREN ZUR ERZEUGUNG UND ZUM ANALYSIEREN DER DIENST-VOICE-AUSSTRAHLUNGSANFORDERUNGEN IN EINEM NETZWERK MIT GETRENNTER TRÄGER- UND ANRUFSTEURUNG
PROCÉDÉ DE CRÉATION ET D'ANALYSE DE REQUÊTE DE DIFFUSION DE VOIX DE SERVICE DANS UN RÉSEAU AVEC TRAITEMENT DE CONNEXION ET D'APPEL SÉPARÉS

(30) Priority: 12.11.2003 CN 200310113478
(43) Date of publication of application: 16.08.2006
(73) Proprietor: ZTE Corporation, Shenzhen, Guangdong 518057 (CN)
(72) Inventor: CHU, Junsheng, ZTE Plaza, Keji Road South, Shenzhen, Guangdong 518057 (CN); ZHOU, Yuxiang, ZTE Plaza, Keji Road South, Shenzhen, Guangdng 518057 (CN)
(74) Representative: Hale, Peter
(86) International application number: PCT/CN2004/000932
(87) International publication number: WO 2005/048528

(56) References cited:
- EP-A2- 1 096 766
- EP-A2- 1 096 769
- US-A- 4 630 261
- US-A1- 2003 112 927
- "Gateway control protocol: Advanced media server packages; H.248.9 (03/02)", ITU-T STANDARD, INTERNATIONAL TELECOMMUNICATION UNION, GENEVA ; CH, no. H.248.9 (03/02), 29 March 2002 (2002-03-29), pages 1-50, XP017463468, [retrieved on 2002-10-07]

## Description

### Technical Field of the Invention

The present invention relates to a method for creating and parsing service voice broadcasting requests and a method for managing and broadcasting service voices in a bearer and control separated network, in particular, to a method for creating broadcasting requests of service voices operated by different operators in control network section, and parsing the service voice broadcasting requests in bearer network section to accomplish the service voice broadcasting required by the control network section.

### Background of the Invention

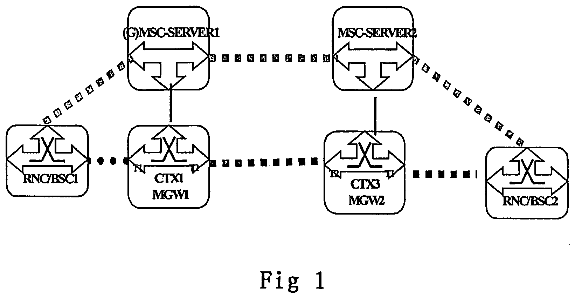

The trend to the development of mobile communication technology is to separate control from bearer, and in a bearer and control separated network(including CAMEL, R4, R5, and NGN etc.), the entities respectively corresponding to control and bearer are MGC (Media Gateway Controller, such as MSC SERVER, which will be referred to as SERVER hereinafter) and MGW (Media GateWay), wherein the SERVER is responsible for the signaling flow in call establishment, while the MGW provides the bearer and various voice resources required in the call establishment. The specific network structure is shown in Fig 1. The lines between the RNC/BSC (Radio Network Controller/Base Station Controller) 1, MSC SERVER 1, MSC SERVER 2 and RNC/BSC 2 represent call control signaling, and the lines between the RNC/BSC 1, MGW 1 (CTX1: context1), MGW 2 (CTX 2), RNC/BSC 2 represent bearer control signaling and bearer media.

Since bearer is separated from control in the network, all the resources are centrally managed and maintained by the MGW, and the SERVER no longer directly manages and maintains the resources. If the SERVER requires to broadcast voice, it must notify the MGW by way of message to apply for certain resources and to perform broadcasting of voice notification. In a bearer and control separated network, the process for broadcasting a piece of service voice (ie.record) roughly comprises the following steps:
during a call, the SERVER requires to broadcast a piece of service voice to the user. In particular, it may be a basic service voice indicating a call failure, or an intelligent service voice which can interact with an intelligent service;
the SERVER encodes the service voice into a text string according to a service voice numbering scheme based on which service voice required to be currently broadcasted (if there is a variable voice portion, then performs encoding based on a variable portion independent manner). Then the message is sent to MGW in group;
upon receiving the message for broadcasting the service voice, the MGW parses out the address information (there may be a variable portion) of the service voice to be broadcasted according to the service voice notification numbering method and grammar specification;
the MGW obtains the tone code for the service voice and the variable portion by using database configuration according to the address information and sends them to the tone board to perform voice broadcasting; and
the MGW returns a response to the SERVER indicating voiced broadcasting is successful..

In addition, if the SERVER requires that a voice broadcasting completion message should be returned, then after the voiced broadcasting is completed, the MGW will indicate to the SERVER that the voice broadcasting is completed.

As the services are different, the entries for voice broadcasting are also different, wherein China Mobile specifies 16 entries of GMSC basic service voice, 48 entries of prepaid service voice, and the entries of Vpmn service voices are as many as 136. Further, there are other services include Familiarity service, Wad (Wireless Advertisement) service etc, each operator has customized a set of service voice for them. To implement these service voices, it is required that manufacturers perform unified, normative numbering on these service voices to facilitate interworking on service voice broadcasting between the SERVER and the MGW.

Currently, ITU-T H248.9 protocol includes normative grammar description on service voice broadcasting, requiring the SERVER to specify the record notification (including variable voice implementation portion) to be broadcasted by using URL (Uniform Resource Locator) address, in particular, there may be four types of grammar format such as simple/file/ftp/http. Upon receiving a broadcasting request message in such a grammar format, the MGW parses out the specific record notification to be broadcasted according to the URL address of the record. However, at present, there is no prescribed related numbering and parsing schemes for the various service voices in the protocol, and each operator has not yet proposed a detailed, normative method for numbering and parsing service voices.

The ITU-T H248.9 includes certain grammar description on voice numbering, but voice management may be not normative, the detailed example is as follows:
paradigm 1: http://localhost/1947?sel=lang=en-gb-glg
   analysis: wherein "localhost" represents local, "1947" is the number for service voice. This method collectively stores various service voices in a local server and performs unified numbering. In case there are numerous kinds of services and each service have many related service voices, and different operators have respective requirements on voice broadcasting, the service voice management will become a huge and boring job and it is not easy to perform maintenance.
paradigm 2: http://darkstar/audio/ann7?sel=lang=en
   analysis: various service voices are collectively stored in the darkstar server, the current voice is in the audio, and the name of the voice is ann7. This method has performed certain classification on service voices, but in this situation, for service voice broadcasting, different operators may have different requirements on service voice broadcasting for a same service, which requires the service voices provided on the MGW by manufacturers must be aiming at corresponding operators, this kind of voice numbering also cannot meet the requirement for normative voice manage.

EP1096766A2 discloses methods and systems for providing access to stored audio data. The methods and systems are capable of playing provisioned sequences of audio data to end users, where the provisioned sequences are identifiable using a unique audio identifier.

### Summary of the Invention

In an aspect, there is provided a method for managing service voices in a bearer and control separated network, as defined in claim 1.

In view of the above, the technical problems to be solved by the present invention is to provide a method for creating and parsing traffic voice broadcasting requests in a bearer and control separated network and a method for managing and broadcasting service voices, which can meet different operators' different requirements on service voice broadcasting, and make different manufacturers' resource request and management on service voices become unified, thereby facilitating management maintenance and subsequent extension.

To solve the above technical problems, the present invention provides a method for managing service voices in a bearer and control separated network, comprising: storing record files corresponding to the service voices according to operators and service categories the service voices belong to, respectively; numbering each of said service voices according to the operator and the service category it belongs to; assigning an identifier to each of said service voices.

Preferably, said identifier comprises text identifier and numeric identifier; said text identifier comprises therein the identifier of the operator to which said service voice belongs, the identifier of the service category to which said service voice belongs and numeric number of said service voice in the service category it belongs to; said numeric identifier is the numeric number of said service voice in the category it belongs to.

Preferably, said service category comprises: basic service, prepaid service, virtual private mobile network service and wireless advertisement service.

To solve the above technical problems, the present invention further provides a method for creating service voice broadcasting requests in a bearer and control separated network, wherein the service voices in said bearer and control separated network are separately stored and numbered according to the operators and service categories they belong to, said service voice broadcasting request comprises therein the operator to which the service voice to be broadcasted belongs, the service category to which the service voice to be broadcasted belongs, its number in said service category, and storage location of the record file corresponding to said service voice to be broadcasted, these parameters are used to determine the record file to be broadcasted and information on broadcasting.

Preferably, said method comprises: determining the operator to which the service voice to be broadcasted belongs, the service category to which the service voice to be broadcasted belongs, its number in said service category, and storage location of the record file corresponding to said service voice; hierarchically combining the identifier of the operator, the identifier of the service category, the number of the service voice and the storage location into an URL address; sending out said URL address as service voice broadcasting request.

Preferably, said method further comprises: adding identifier of specified language type used in broadcasting said service voice into said URL address.

Preferably, said method further comprises: when said service voice contains a variable portion, determining information about the type, sub-type and value of the variable portion of said service voice; adding said information about the type, sub-type and value of the variable portion into said URL address.

Preferably, in said method, the URL address is in the format of simple, file, ftp or http.

Preferably, in said method, the URL is in the format of http, the URL address for the service voice is generated in the format of http://Operator/ServiceCategory/ServiceVoiceNumber.

Preferably, said http format further comprises therein language type and information parameter about variable portion.

To solve the above technical problems, the present invention further provides a method for parsing service voice broadcasting requests in a bearer and control separated network, wherein the service voices in said bearer and control separated network are separately stored and numbered according to the operators and service categories said service voices belong to, said service voice broadcasting request comprises therein the operator to which the service voice to be broadcasted belongs, the service category to which the service voice to be broadcasted belongs, its number in said service category, and storage location of the record file corresponding to said service voice, these parameters are used to locate the record file to be broadcasted and to determine the form of broadcasting.

Preferably, said method comprises: receiving a service voice broadcasting request message; parsing the operator to which the service voice to be broadcasted belongs, the service category to which the service voice to be broadcasted belongs, its number in said service category, and storage location of the record file corresponding to said service voice from the URL address of said service voice broadcasting request message; retrieving the record file to be broadcasted according to said parsed information.

Preferably, said method further comprises: determining whether said URL address comprises therein a variable portion, and if so, parsing out information about the type, sub-type and value of the variable portion.

Preferably, said method further comprises: parsing out specified language type to be used in broadcasting said service voice from said URL address.

Preferably, said method further comprises: transforming said retrieved record file along with parsed information about variable portion, if there is, into tone code and then sending it to tone board, in order to perform broadcasting in the language of said specified type.

To solve the above technical problems, the present invention yet provides a method for broadcasting service voices in a bearer and control separated network, wherein the service voices in said bearer and control separated network are separately stored and numbered according to the operators and service categories said service voices belong to, said method comprises: determining, by a Media Gateway Controller, the service voice to be broadcasted; determining, by the Media Gateway Controller, the operator to which the service voice belongs, the service category to which the service voice belongs, its number in said service category, and storage location of the record file corresponding to said service voice; hierarchically combining, by the Media Gateway Controller, the identifier of the operator, the identifier of the service category, the number of the service voice and the storage location into an URL address; sending, by the Media Gateway Controller, said URL address as service voice broadcasting request to a Media Gateway; upon receiving said service voice broadcasting request, parsing, by the Media Gateway, the operator to which the service voice to be broadcasted belongs, the service category to which the service voice to be broadcasted belongs, its number in said service category, and storage location of the record file corresponding to said service voice from the URL address contained in said request; retrieving, by the Media Gateway, the record file to be broadcasted according to said parsed information; transforming, by the Media Gateway, said record file into tone code and then sending it to tone board for broadcasting.

Preferably, said method further comprises: when said service voice further contains a variable portion, determining, by the Media Gateway Controller, information about the type, sub-type and value of the variable portion of said service voice; adding, by the Media Gateway Controller, said information about the type, sub-type and value of the variable portion into said URL address.

Preferably, said method further comprises: determining, by the Media Gateway, whether said URL address contains therein a variable portion, if so, parsing out information about the type, sub-type and value of the variable portion; transforming, by the Media Gateway, said information about the variable portion into tone code and sending it to tone board for broadcasting with said record file.

Preferably, said URL address further contains therein specified language type to be used in broadcasting said service voice, said broadcasting step further comprises: broadcasting said record file and said information about the variable portion using said specified language.

From the above it can be seen that the present invention employs a normative, hierarchical manner to create broadcasting request of service voice operated by different operators in the control network section, and to parse the created broadcast request in the bearer network section to accomplish the record notification broadcasting required by the control network section. The broadcasting request of service voice employs the manner of URL address (e.g., HTTP mechanism), that is, for different operators' different service, each piece of service voice is assigned with an URL address, which can meet different operators' different requirements on service voice broadcasting, make different manufactures' resource request and management on service voice become unified, thereby facilitating management maintenance and subsequent service extension.

### Brief Description of the Drawings

It is believed that the above features, advantages and objectives of the invention will be better understood through the following description of the implementations of the invention in conjunction with the accompany drawings, in which:
Fig 1 is a diagram of a bearer and control separated network;
Fig 2 is a flowchart of the method for creating service voice broadcasting requests, in accordance with one embodiment of the invention;
Fig 3 is a flowchart of the method for parsing service voice broadcasting requests, in accordance with one embodiment of the invention; and
Fig 4 is a flowchart of the method for broadcasting service voices, in accordance with one embodiment of the invention.

### Detailed Description of the Preferred Embodiments

### First embodiment

The service voice broadcasting requests of the present embodiment adopt the form of http, the format of which is as follows:
httpurl = "http://" host [":" port ] [abs_path ["?" query]]
therein, the present embodiment, for the "host" portion, if the storage location of record files (the record files herein should be understood as record related database files) corresponding to the service voices are all local to the MGW, then it is localhost; if record files are in other server, then it is the hostname of the other server;
for the "abs_path", the format of which is as follows: //pathl/path2/filename. It is specified that the "path1" represents operator's category, the "path2" represents service's category, and the "filename" employs numeric number to represent voice number in a service, the language of the service voice is represented by the parameter "Selector", sometimes a variable portion such as time should also be appended.

Therein, the operators' ID are as follows: China Mobile is Cmcc; China Telecom is Ctcc; China Netcom is Cncc; China Unicom is Cucc.

The example of service categories is as follows: Mobile Prepaid service is Pps; Virtual Private Mobile Network service is Vpmn; Wireless Advertisement service is Wad, etc.

Service voice numbers includes that of basic service voice, prepaid service voice, intelligent service voice, etc., in which:
the example of voice number of a basic service voice is as follows:
   VoiceTextCode VoiceBinaryCode VoiceContent
      Cmcc_bs_1 0x0001 Chinese: 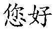 ! 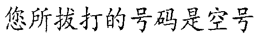 , 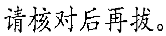 English: sorry! The number you dialed does not exist, please check it and redial.
      Cmcc_bs_2 0x0002 Chinese: 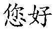 ! 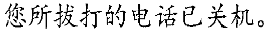 English: Sorry! the subscriber you dialed is power off.
the example of voice number of a prepaid service voice is as follows:
   VoiceTextCode VoiceBinaryCode Voice Content
      Cmcc_pps_1 0x0001 Chinese: 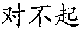 , 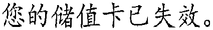 English: Sorry, your prepaid SIM card is invalid.
      Cmcc_pps_2 0x0002 Chinese: 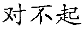 , 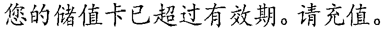 English: Sorry, your prepaid SIM card has expired. Please recharge.

If the record is in Chinese, then parameter Selector is represented as: Sel=lang=chn; if it is in English, the parameter Selector is represented as: Sel=lang=en.

The grammar rule of the variable portion is as follows: var=<t=? , s=? , v=? >
wherein, "t" is the type of the variable portion, such as: Timer, Weekday, Date, Month, Duration, Digits, Chars, Money, Integer, Silence, etc.; "s" is the sub-type of the variable portion, such as, for Date, it may be mdy(month-day-year), ymd(year-month-day), dmy (day-month-year), etc., for Money, it is kind of currency; "v" is the value of the variable portion.

In the present embodiment, the SERVER is to broadcast in Chinese the 9th record entry of the PPS service (Prepaid service) of the China Mobile, the Chinese content of which is 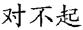 , 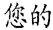 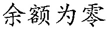 , 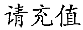 , 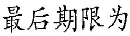 xxxx", the English content of which is "Sorry, Your balance is zero. Please recharge before xxxx", the variable portion is to be inserted at "xxxx", the type of which is date. Assume the final date is 2003/12/30, the sequence for broadcasting of which is: year, month, day, and the corresponding voice file is at the local server, then the encoded URL address is:
http://localhost/cmcc/pps/9?Sel=lang=chn,var=<t=date,s=ymd,v=20031230&sel=lang=chn>.

If the voice file is at other server, such as: AudioRes server, what is needed is to change the "localhost" in the code to "AudioRes".

With the method of the invention, for different operator's different services, each piece of record is assigned with an URL address, and it can be seen that by utilizing such a numbering manner, for different operators, both maintenance and extension of the service voice become very simple.

The grammar format of the service voice broadcasting request of the present embodiment has been introduced hereinabove, and the methods for creating and parsing service voice broadcasting request and the process of broadcasting service voice of the present embodiment are accomplished by a sequences of step related to said grammar format.

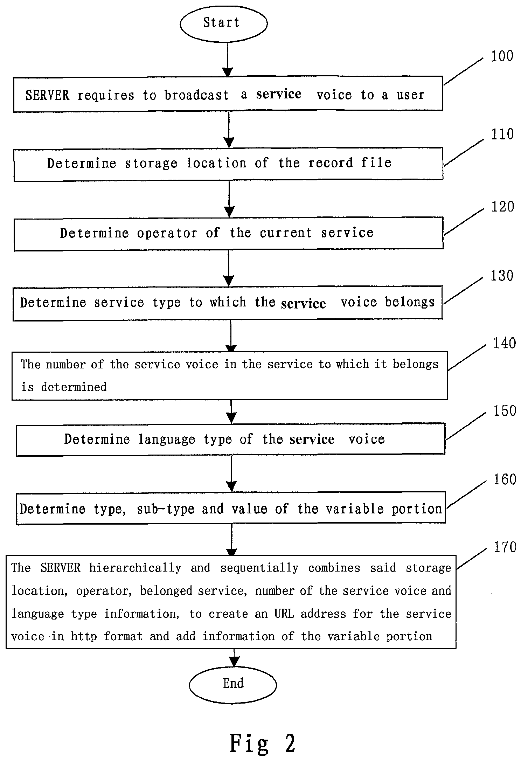

As shown in Fig 2, a flowchart of the method for creating service voice broadcasting requests of the present embodiment is shown, which comprises the following steps:
Step 100, the SERVER requires to broadcast a piece of service voice to a user;
Step 110, the storage location of the record file is determined; (here, the record file refers to the entire record file, not the record file corresponding to said service voice)
Step 120, the operator of the current service is determined;
Step 130, the service type to which the service voice belongs is determined;
Step 140, the number of the service voice in the service to which it belongs is determined;
Step 150, the language type of the service voice is determined;
Step 160, the type, sub-type and value of the variable portion is determined;
Step 170, the SERVER hierarchically and sequentially combines said storage location, operator, belonged service, number of the service voice and language type information, to create an URL address for the service voice in http format and add information of the variable portion.

A string is got after the creation and its length is specified to be up to 400, which is enough for use, and the grammar format of which and the grammar format of the variable portion have been introduced in detail hereinabove.

Said storage location, operator, belonged service, number of the service voice, language type and information of the variable portion can be read directly or be determined according to specific service and an existing method can be employed. It should be noted that the various information in the created URL address should be combined in the order defined in the grammar format; however, it is not limited to certain order in which these information are determined. Step 160 should be cancelled when there is no variable portion in the service voice.

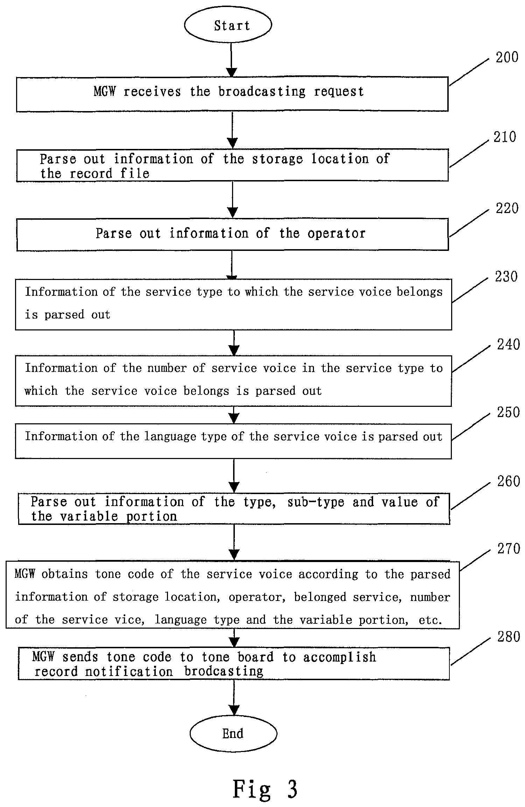

As shown in Fig 3, a flowchart of the method for parsing service voice broadcasting requests of the present embodiment is shown, which corresponds to the creating method, and which comprises the following steps:
Step 200, a service voice broadcasting request (in encoded form) is received by the MGW;
Step 210, information of the storage location of the record file is parsed out;
Step 220, information of the operator is parsed out;
Step 230, information of the service type to which the service voice belongs is parsed out;
Step 240, information of the number of service voice in the service type to which the service voice belongs is parsed out;
Step 250, information of the language type of the service voice is parsed out;
Step 260, information of the type, sub-type and value of the variable portion is parsed out;
Step 270, the tone code corresponding to the piece of service voice is obtained by the MGW through database configuration based on the parsed information of storage location, operator, belonged service, number of the service voice, language type and the variable portion, etc.;
Step 280, the tone code is sent to the tone board by the MGW to accomplish broadcasting of record notification.

The parsing of various information does not necessarily follow the above order. Further, the text description of the variable portion voice can be converted into the tone code to be broadcasted according to description in ITU-T H.248.9 about grammar rules of the variable portion. Step 260 and related content in Step 270 should be cancelled if the service voice does not contain a variable portion.

The voice broadcasting content of this embodiment is the 9th piece of service voice of PPS: Sorry, Your balance is zero. Please recharge before 20031230. When realizing, the tone code may only be: "Sorry", "Your balance is zero. Please recharge before", "2", "0", "0", "3", "1", "2", "3", "0".

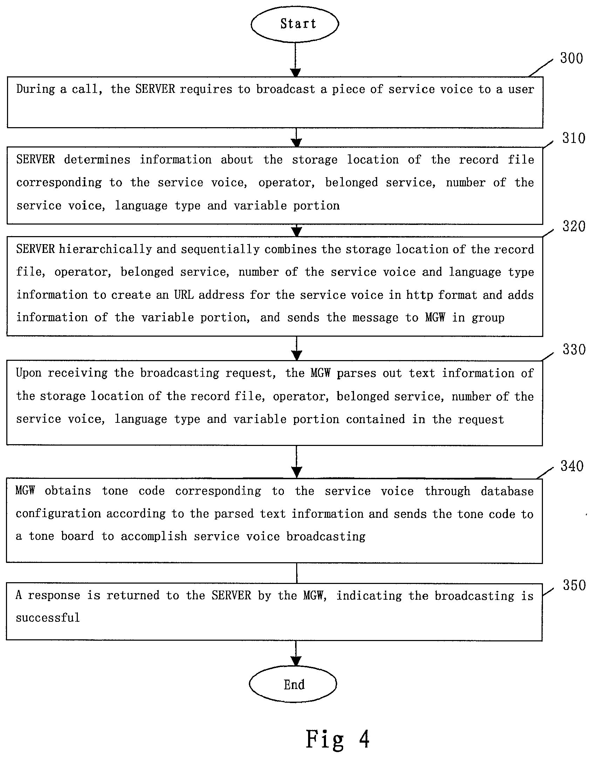

As shown in Fig 4, a flowchart of the method for broadcasting service voices of the present embodiment is shown, in which the detailed manner of numbering and parsing on service voice is some difference, said method comprising:
Step 300, during a call, the SERVER requires to broadcast a piece of service voice to a user;
Step 310, the information about storage location of the record file corresponding to the service voice, as well as operator, belonged service, service voice number, language type and variable portion of the service voice are determined by the SERVER;
Step 320, the obtained information about storage location of the record file, operator, belonged service, service voice number and language type are combined hierarchically and sequentially by the SERVER to create an URL address for the service voice in http format and information of the variable portion is added, then the generated message is sent to MGW in group;
Step 330, upon receiving the broadcasting request, text information of the storage location of the record file, operator, belonged service, service voice number, language type and variable portion contained in the request are parse out by the MGW;
Step 340, the tone code corresponding to the piece of service voice is obtained by the MGW through database configuration according to the parsed text information and is sent to a tone board to accomplish service voice broadcasting;
Step 350, a response is returned to the SERVER by the MGW, indicating the broadcasting is successful.

The content related to the variable portion in the above steps should be cancelled if the service voice does not contain a variable portion, in addition, if the SERVER requires returning a broadcasting completion message, then after the broadcasting has been completed, the MGW should indicate to the SERVER that the broadcasting has been completed.

### Second embodiment

In this embodiment, the grammar rules of the RUL address is the same as that of the first embodiment, the only difference is the specific content. Assume that the SEVER is to broadcast in English the 9th piece of service voice of the VPMN (Virtual Private Mobile Network) service of China Mobile, the Chinese content of which is " 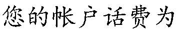 xxxx", the English content of which is "Your account balance is xxxx". The variable portion is to be inserted at "xxxx", the type of which is money, and the content of which is assumed as 200 dollars, the voice file corresponding to which is at the local server, and then the encoded URL address will be:
http://localhost/cmcc/vpmn/9?Sel=lang=en,var=<t=money,s=usd,v=200&sel=lang=en>

The flow of the methods for creating and parsing service voice broadcasting requests and the method for broadcasting service voices is the same as that of the first embodiment, only difference is the content broadcasted.

Since the expansibility of the http manner is relatively strong, the above embodiments employ the http manner. However, according to implementation requirements, other three service voice numbering manners can also be selected, as long as it can provide necessary information therein and combine the necessary information hierarchically. Next, for the first embodiment, the grammar rule on service voice numbering in file manner will be described.

The format in the file manner is:
fileurl = "file://" host path

As compared to the http manner, the location of the record files is limited to local. According to the file format, the number in the first embodiment will be become:
file://cmcc/pps/9?Sel=lang=chn,var=<t=date,s=ymd,v=20031230&sel=lang=chn

The above manner can be employed when the record file is at local. Other manners will not be described one by one.

In summary, the present invention provides a normative, hierarchical method to create broadcasting requests for service voices operated by different operators in a control network section, and to parse the created broadcasting requests in a bearer network section to accomplish record notification broadcasting required by the control network section. It can meet different operators' different requirements on service voice broadcasting, make different manufacturers' resource request and management on service voice become unified, thereby facilitating maintenance and subsequent service extension.

## Claims

1. A method for managing service voices in a bearer and control separated network, wherein said method comprises:
determining (100, 300), by a Media Gateway Controller "MGC", a service voice to be broadcast, wherein service voice is assigned an identifier, wherein the identifier comprises an identifier of the operator to which the service voice belongs, an identifier of a service category to which the service voice belongs and a number of the service voice in the service category the service voice belongs to when said identifier is a text identifier, or wherein the identifier comprises the number of the service voice in the service category it belongs to when said identifier is a numeric identifier;
determining (110-140, 310), by the MGC, the operator to which the service voice to be broadcast belongs, the service category to which the service voice to be broadcast belongs, and the number of the service voice to be broadcast in said service category, and a storage location of a record file corresponding to the service voice to be broadcast;
hierarchically combining (170, 320), by the MGC, the identifier of the operator, the identifier of the service category, the number of the service voice to be broadcast and the storage location of the record file into an URL address;
sending (320), by the MGC, said URL address as a service voice broadcasting request to a Media Gateway, MGW;
upon receiving said service voice broadcasting request, parsing out (200-240, 330), by the MGW, from the URL address contained in the service voice broadcasting request, the operator to which the service voice to be broadcast belongs, the service category to which the service voice to be broadcast belongs, the number of the service voice to be broadcast in the service category it belongs to, and the storage location of the record file corresponding to said service voice;
retrieving (270, 340), by the MGW, the record file corresponding to the service voice to be broadcast according to said parsed information;
transforming (280, 340), by the MGW, said record file into a tone code and then sending the tone code to a tone board for broadcasting.

2. The method according to claim 1, wherein said service category comprises:
basic service, prepaid service, virtual private mobile network service and wireless advertisement service.

3. The method according to claim 1, wherein, in said method, the URL address is in the format of simple, file, ftp or http.

4. The method according to claim 1, wherein, in said method, the URL is in the format of http, the URL address for the service voice is generated in the format of
http://0perator/ServiceCategory/ServiceVoiceNumber.

5. The method according to any one of claims 1 to 4, wherein said method further comprises:
when said service voice further contains a variable portion, determining (160, 310), by the MGC, information about a type, a sub-type and a value of the variable portion of said service voice;
adding (170, 320), by the MGC, said information about the type, sub-type and value of the variable portion into said URL address.

6. The method according to claim 5, wherein said method further comprises:
determining, by the MGW, whether the URL address contains therein a variable portion, and if so, parsing out (260, 330), by the MGW, the information about the type, sub-type and value of the variable portion;
transforming (280, 340), by the MGW, said information about the variable portion into a tone code and sending it to the tone board for broadcasting with said record file.

7. The method according to claim 1 or 6, wherein said URL address further contains therein a specified language type to be used in broadcasting said service voice, wherein said broadcasting step further comprises:
broadcasting said record file and said information about the variable portion using the specified language type.

## Patentansprüche

1. Verfahren zum Verwalten von Dienst-Stimmen (service voices) in einem Netzwerk mit einer von einem Träger getrennten Anrufsteuerung, wobei das Verfahren beinhaltet:
Bestimmen (100, 300), durch einen Media Gateway Controller "MGC", einer zu sendenden Dienst-Stimme, wobei der Dienst-Stimme eine Kennung zugeordnet ist, wobei die Kennung eine Kennung des Betreibers aufweist, zu dem die Dienst-Stimme gehört, eine Kennung einer Dienst-Kategorie, zu der die Dienst-Stimme gehört, und eine Nummer der Dienst-Stimme in der Dienst-Kategorie, zu der die Dienst-Stimme gehört, wenn die Kennung eine Textkennung ist, oder wobei die Kennung die Nummer der Dienst-Stimme in der Dienst-Kategorie aufweist, zu der sie gehört, wenn die Kennung eine numerische Kennung ist;
Bestimmen (110-140, 310), durch den MGC, des Betreibers, zu dem die zu sendende Dienst-Stimme gehört, der Dienst-Kategorie, zu der die zu sendende Dienst-Stimme gehört, und der Nummer der zu sendenden Dienst-Stimme in der Dienst-Kategorie, und eines Speicherplatzes einer Aufzeichnungsdatei entsprechend der zu sendenden Dienst-Stimme;
hierarchisches Kombinieren (170, 320), durch den MGC, der Kennung des Betreibers, der Kennung der Dienst-Kategorie, der Nummer der zu sendenden Dienst-Stimme und des Speicherplatzes der Aufzeichnungsdatei in einer URL-Adresse;
Senden (320), durch den MGC, der URL-Adresse als Dienst-Stimmen-Sendeanfrage an ein Media Gateway, MGW;
nach Empfang der Dienst-Stimmen-Sendeanfrage, Parsen (200-240, 330), durch das MGW, aus der URL-Adresse, die in der Dienst-Stimmen-Sendeanfrage enthalten ist, des Betreibers, zu dem die zu sendende Dienst-Stimme gehört, der Dienst-Kategorie, zu der die zu sendende Dienst-Stimme gehört, der Nummer der zu sendenden Dienst-Stimme in der Dienst-Kategorie, zu der sie gehört, und des Speicherplatzes der Aufzeichnungsdatei entsprechend der Dienst-Stimme;
Abrufen (270, 340), durch das MGW, der Aufzeichnungsdatei entsprechend der zu sendenden Dienst-Stimme gemäß den geparsten Informationen;
Umwandeln (280, 340), durch das MGW, der Aufzeichnungsdatei in einen Toncode und dann Senden des Toncodes an ein Tonboard zum Senden.

2. Verfahren nach Anspruch 1, wobei die Dienst-Kategorie aufweist:
Grunddienst, vorausbezahlten Dienst, virtuellen privaten mobilen Netzwerkdienst und drahtlosen Werbedienst.

3. Verfahren nach Anspruch 1, wobei bei dem Verfahren die URL-Adresse im Format simple, file, ftp oder http vorliegt.

4. Verfahren nach Anspruch 1, wobei bei dem Verfahren die URL im Format http vorliegt und die URL-Adresse für die Dienst-Stimme im Format
http://0perator/ServiceCategory/ServiceVoiceNumber [http://Betreiber/Dienst-Kategorie/Dienst-Stimme-Nummer] erzeugt wird.

5. Verfahren nach einem der Ansprüche 1 bis 4, wobei das Verfahren des Weiteren beinhaltet:
wenn die Dienst-Stimme des Weiteren einen variablen Abschnitt enthält, Ermitteln (160, 310), durch den MGC, von Informationen über einen Typ, einen Untertyp und einen Wert des variablen Abschnitts der Dienst-Stimme;
Hinzufügen (170, 320), durch den MGC, der Informationen über den Typ, den Untertyp und den Wert des variablen Abschnitts zu der URL-Adresse.

6. Verfahren nach Anspruch 5, wobei das Verfahren des Weiteren beinhaltet:
Ermitteln, durch das MGW, ob die URL-Adresse einen variablen Abschnitt enthält und, im positiven Fall, Parsen (260, 330), durch das MGW, der Informationen über den Typ, den Untertyp und den Wert des variablen Abschnitts;
Umwandeln (280, 340), durch das MGW, der Informationen über den variablen Abschnitt in einen Toncode und Senden desselben an das Tonboard zum Senden mit der Aufzeichnungsdatei.

7. Verfahren nach Anspruch 1 oder 6, wobei die URL-Adresse des Weiteren einen bestimmten Sprachen-Typ enthält, der beim Senden der Dienst-Stimme zu verwenden ist, wobei der Schritt des Sendens des Weiteren beinhaltet:
Senden der Aufzeichnungsdatei und der Informationen über den variablen Abschnitt unter Verwendung des bestimmten Sprachen-Typs.

## Revendications

1. Procédé pour gérer des voix de service dans un réseau distinct de support et commande, dans lequel ledit procédé comprend :
la détermination (100, 300), par un contrôleur de passerelle de média « MGC », d'une voix de service à diffuser, la voix de service étant affectée à un identificateur, l'identificateur comprenant un identificateur de l'opérateur auquel la voix de service appartient, un identificateur d'une catégorie de service à laquelle la voix de service appartient et un numéro de la voix de service dans la catégorie de service à laquelle la voix de service appartient lorsque ledit identificateur est un identificateur de texte, ou l'identificateur comprenant le numéro de la voix de service dans la catégorie de service à laquelle elle appartient lorsque ledit identificateur est un identificateur numérique ;
la détermination (110-140, 310), par le MGC, de l'opérateur auquel la voix de service à diffuser appartient, de la catégorie de service à laquelle la voix de service à diffuser appartient, et du numéro de la voix de service à diffuser dans ladite catégorie de service, et d'un emplacement de stockage d'un fichier d'enregistrement correspondant à la voix de service à diffuser ;
la combinaison hiérarchique (170, 320), par le MGC, de l'identificateur de l'opérateur, de l'identificateur de la catégorie de service, du numéro de la voix de service à diffuser et de l'emplacement de stockage du fichier d'enregistrement dans une adresse URL ;
l'envoi (320), par le MGC, de ladite adresse URL en tant que requête de diffusion de voix de service à une passerelle de média, MGW ;
après réception de ladite requête de diffusion de voix de service, l'analyse (200-240, 330), par la MGW, à partir de l'adresse URL contenue dans la requête de diffusion de voix de service, de l'opérateur auquel la voix de service à diffuser appartient, de la catégorie de service à laquelle la voix de service à diffuser appartient, du numéro de la voix de service à diffuser dans la catégorie de service à laquelle elle appartient, et de l'emplacement de stockage du fichier d'enregistrement correspondant à ladite voix de service ;
l'extraction (270, 340), par la MGW, du fichier d'enregistrement correspondant à la voix de service à diffuser selon lesdites informations analysées ;
la transformation (280, 340), par la MGW, dudit fichier d'enregistrement en un code de tonalités et ensuite l'envoi du code de tonalités à une carte de tonalités pour une diffusion.

2. Procédé selon la revendication 1, dans lequel ladite catégorie de service comprend :
un service de base, un service prépayé, un service de réseau mobile privé virtuel et un service de publicité sans fil.

3. Procédé selon la revendication 1, dans lequel, dans ledit procédé, l'adresse URL est dans le format de simple, fichier, ftp ou http.

4. Procédé selon la revendication 1, dans lequel, dans ledit procédé, l'URL est dans le format de http, l'adresse URL pour la voix de service est générée dans le format de http://0perator/ServiceCategory/ServiceVoiceNumber.

5. Procédé selon l'une quelconque des revendications 1 à 4, dans lequel ledit procédé comprend en outre :
lorsque ladite voix de service contient en outre une partie variable, la détermination (160, 310), par le MGC, d'informations concernant un type, un sous-type et une valeur de la partie variable de ladite voix de service ;
l'ajout (170, 320), par le MGC, desdites informations concernant le type, le sous-type et la valeur de la partie variable dans ladite adresse URL.

6. Procédé selon la revendication 5, dans lequel ledit procédé comprend en outre :
la détermination, par la MGW, du point de savoir si l'adresse URL contient ou non dans celle-ci une partie variable, et si tel est le cas, l'analyse (260, 330), par la MGW, des informations concernant le type, le sous-type et la valeur de la partie variable ;
la transformation (280, 340), par la MGW, desdites informations concernant la partie variable en un code de tonalités et l'envoi de celui-ci à la carte de tonalités pour une diffusion avec ledit fichier d'enregistrement.

7. Procédé selon la revendication 1 ou 6, dans lequel l'adresse URL contient en outre dans celle-ci un type de langage spécifié à utiliser dans la diffusion de ladite voix de service, dans lequel ladite étape de diffusion comprend en outre :
la diffusion dudit fichier d'enregistrement et desdites informations concernant la partie variable à l'aide du type de langage spécifié.
